# EUROPÄISCHE PATENTSCHRIFT

(11) **EP 2 256 011 B1**
(45) Veröffentlichungstag und Bekanntmachung des Hinweises auf die Patenterteilung: **29.07.2015**
(21) Anmeldenummer: 10000564.4
(22) Anmeldetag: 21.01.2010
(51) Int. Cl.: B60T 8/36, B60T 8/30, B60T 8/26, B60T 13/68

(54) **Bremsanlage für ein Fahrzeug und Verfahren zum Betreiben der Bremsanlage**
Vehicle braking system and method for operating said braking system
Système de freinage pour véhicule et procédé pour faire fonctionner ce système de freinage

(30) Priorität: 20.05.2009 DE 102009022164
(43) Veröffentlichungstag der Anmeldung: 01.12.2010
(73) Patentinhaber: WABCO GmbH, 30453 Hannover (DE)
(72) Erfinder: Eckert, Horst, 31547 Rehburg-Loccum (DE); Wolff, Hans-Klaus, 31832 Springe (DE)
(74) Vertreter: Lauerwald, Jörg

(56) Entgegenhaltungen:
- WO-A1-98/13239
- WO-A1-2005/051739
- DE-A1- 19 947 753

## Beschreibung

Die Erfindung betrifft eine Bremsanlage für ein Fahrzeug, insbesondere ein Nutzfahrzeug mit mindestens einer Vorderachse und einer Hinterachse, ein Verfahren zum Betreiben einer Bremsanlage sowie eine Ventileinrichtung, die für die erfindungsgemäße Bremsanlage einsetzbar ist.

In Bremsanlagen, z.B. pneumatischen Bremsanlagen von Nutzfahrzeugen, gibt der Fahrer seinen Bremswunsch im Allgemeinen über ein Bremspedal auf ein Bremsventil ein, das in den verschiedenen Bremskreisen jeweils einen Druckluftspeicher mit einer Bremsdruck-Zuführleitung des jeweiligen Bremskreises verbindet. Bei einem Nutzfahrzeug mit z. B. einer angetriebenen Hinterachse und z. B. einer Vorderachse sind z. B. in der Regel jeweils ein Bremskreis für die Hinterachse und die Vorderachse vorgesehen; ergänzend kann z. B. ein weiterer Druckluftkreis für Bremsen eines Anhängers vorgesehen sein. Die Druckluftleitung der Hinterachse wird in der Regel über z. B. ein Zweiwegeventil einem Relaisventil zugeführt, das an ABS-Magnetventile angeschlossen ist, die zu den Bremszylindern der jeweiligen Radbremsen der Hinterachse führen. Durch Messung der Raddrehzahlen kann an den Rädern der Hinterachse eine ABS-Regelung durchgeführt werden, bei der bei Erkennen auf eine beginnende Blockierneigung eines Rades die Druckzuführung gesperrt wird und die von dem ABS-Magnetventil zu dem Bremszylinder führende Bremsleitung zumindest teilweise entlüftet werden kann, um das blockiergefährdete Rad wieder freizugeben.

Neben einer ABS-Regelung sind jedoch noch weitere Regelungen bekannt, die zum Teil in ungewollter Weise wechselwirken können. Bei einer Antriebsschlupfregelung (ASR) wird bei Erkennen eines Durchdrehens eines angetriebenen Hinterachsrads dieses von der Steuereinrichtung über das Differentialventil und das ABS-Magnetventil der Fahrzeugseite des durchdrehenden Hinterachsrades selbsttätig abgebremst, ohne dass der Fahrer hierzu die Bremse betätigt. Weiterhin sind lastabhängige Regelungen an der Vorderachse und Hinterachse, insbesondere auch zur Bremslastverteilung beider Achsen bekannt. Bei einem herkömmlichen Bremssystem mit einem konventionellen mechanischen ALB- (Automatisch Lastabhängiger Bremskraft-) Regler kann der Bremsdruck der Vorderachse in Abhängigkeit der Achslast der Hinterachse mitgeregelt werden. Hierzu wird der Hinterachslastabhängig geregelte Druck nach dem ALB-Regler und vor den ABS- Magnetventilen abgegriffen und zu einem Steueranschluss des Bremsventils geführt, über den eine Teilfläche eines Kolbens des Bremsventils beaufschlagt wird und somit den Bremsdruck auch an der Vorderachse mit beeinflusst. Da bei dieser rein mechanischen Lösung der Abgriff vor dem ABS-Magnetventil erfolgt, beeinflusst eine aktive ABS-Regelung eines Hinterachs-Rades diese Mitregelung des Vorderachs-Druckes nicht.

Die WO2005/051739A1 offenbart eine Bremsanlage, insbesondere für Nutzfahrzeuge, mit einem Vorderachsbremskreis und einem Hinterachsbremskreis, mit einem im Vorderachsbremskreis vorgesehenen Lastleerventil, das den Bremsdruck an den Bremszylindern der Vorderachse beeinflusst und mit einer automatisch-lastabhängigen Bremsdruckregelung im Hinterachsbremskreis, wobei der Bremsdruck an den Bremszylindern der Hinterachse in Abhängigkeit von der auf die Hinterachse einwirkenden Last beeinflusst wird, wobei ein Steuereingang des Lastleerventils über eine fluidische Verbindung mit dem Hinterachsbremskreis verbunden ist, wobei ein Sperrventil in der fluidischen Verbindung zwischen dem Lastleerventil und dem Hinterachs- bremskreis vorgesehen ist, das bei einer Bremsschlupfregelung an der Hinterachse in seine Sperrstellung umgeschaltet wird, wobei die fluidische Verbindung vom Lastleerventil in Richtung der Bremszylinder der Hinterachse gesperrt ist.

Die DE19947753A1 beschreibt eine Druckluftbremseinrichtung, insbesondere für Nutzfahrzeuge, mit einer dreikanaligen Blockierschutzeinrichtung, bei welcher die beiden Hinterradbremsen durch ein gemeinsames Hinterachs-Blockierschutzregelventil gesteuert mit einem Hinterachs-Bremsdruck beaufschlagbar sind, einer Steuereinrichtung, durch die der Beladungszustand und/oder die Achslastverteilung und/oder der Sollhinterachs-Bremsdruck erfassbar und/oder errechenbar sind, wobei bei einer Betriebsbremsung Abweichungen des Sollhinterachs-Bremsdrucks von dem von einem Sensormittel erfassten Ist-Hinterachs-Bremsdruck durch das Hinterachs-Blockierschutzventil ausregelbar sind.

Statt der konventionellen mechanischen ALB-Regelungen werden jedoch elektronische EBL-(Electronic Brake Limiter) oder EBD (Electronic Brake Distribution)-Funktionen eingesetzt, bei denen der Bremsdruck an der Hinterachse geregelt wird, um noch vor Auftreten einer Blockierneigung eines Rades eine Bremsdruckbegrenzung zu erreichen. Hierzu wird erkannt, wenn der Bremsdruck in einer Bremsleitung der Hinterachse ausreichend ist und bei gesteigertem Bremswunsch des Fahrers eine weitere Erhöhung des Bremsdrucks zu einer Blockierneigung führen könnte. Dieser Grenz- Bremsdruck ist hierbei lastabhängig, wobei insbesondere bei leeren Nutzfahrzeugen und somit geringer Hinterachs-Last bereits bei geringeren Bremsdrücken eine Blockierneigung auftreten kann. Wenn bei Feststellen eines hinreichend hohen Bremsdrucks an der Hinterachse der Fahrer über das Bremsventil einen höheren Bremswunsch eingibt, was über einen an einen Bremskreis angeschlossenen Drucksensor erkannt werden kann, wird der Eingang des ABS-Magnetventiles eines oder beider Räder der Hinterachse gesperrt und somit der in der Bremsleitung zwischen dem ABS-Magnetventil und dem Bremszylinder aufgenommene Druck gespeichert und somit festgehalten, bis entweder die Blockierneigung bzw. Gefahr einer Blockierneigung nicht mehr besteht und/oder der Bremswunsch des Fahrers wieder verringert wird. In einem derartigen System darf jedoch keine Mitregelung der Vorderachse erfolgen, da ansonsten eine aktive ABS-Regelung eines Hinterachs-Rades die Mitregelung des Vorderachs-Druckes beeinflussen würde. Derartige EBL-oder EBD-Funktionen sind somit zwar kostengünstiger als konventionelle mechanische ALB-Regelungen und ermöglichen eine schnelle Regelung, erlauben jedoch nicht mehr eine achslastangepasste Mitregelung der Vorderachse.

Der Erfindung liegt die Aufgabe zu Grunde, eine Bremsanlage für ein Fahrzeug und ein Verfahren zum Betreiben einer derartigen Bremsanlage dahingehend weiter zu entwickeln, dass mit relativ geringem apparativem Aufwand eine achslastabhängige Bremsdruckregelung des Fahrzeugs ermöglicht wird.

Diese Aufgabe wird durch eine Bremsanlage nach Anspruch 1 und ein Verfahren nach Anspruch 16 gelöst. Die Unteransprüche beschreiben bevorzugte Weiterbildungen. Ergänzend ist eine Ventileinrichtung zum Einsatz in einer erfindungsgemäßen Bremsanlage vorgesehen.

Erfindungsgemäß erfolgt somit eine elektronische Bremskraftbegrenzung an zumindest einer Radbremse der Hinterachse durch gegebenenfalls Sperren des ABS- Magnetventils bei Erkennen eines hinreichenden Hinterachs-Bremsdrucks und weiterer Erhöhung des Bremsdrucks in der Bremsdruck-Zuführleitung, wie sie als solche aus EBL-oder EBD-Funktionen bekannt ist. Es erfolgt jedoch erfindungsgemäß eine Rückführung von Bremsdruck von einer Bremsleitung der Hinterachse, d.h. hinter dem ABS-Magnetventil, über eine Rückführ-Steuerleitung zu einem Steueranschluss des Bremsventils. Hierbei ist eine Zusatzschaltung in der Rückführ-Steuerleitung vorgesehen, um in problematischen Situationen die Steuer-rückführung zu unterbrechen.

Eine derartige Situation ist insbesondere eine ABS-Regelung. Hierzu wird erfindungsgemäß erkannt, dass bei einer ABS-Regelung zeitweise eine Druckreduzierung bzw. Entlüftung der Bremsleitung zwischen dem Bremszylinder und dem ABS-Magnetventil erfolgt, die erfindungsgemäß nicht rückgeführt werden soll. Diese Druckreduzierung bzw. Entlüftung kann bereits durch eine Ventileinrichtung in der Rückführ-Steuerleitung blockiert werden, z. B. bereits durch ein einfaches Rückschlagventil bzw. ein Ventil, das ein Rückschlagventil enthält. Ergänzend kann z. B. ein weiteres Rückschlagventil für die Entlüftung der Rückführ-Steuerleitung hinter dem Rückschlagventil vorgesehen sein. Erfindungsgemäß wird unter einem Rückschlagventil funktionell auch ein Ventil mit einer Rückschlagventil-Funktion verstanden, das somit einen Rückfluss sperrt.

Bereits durch eine derartige Ausbildung mit mindestens einem Rückschlagventil kann somit die gewünschte Mitregelung der Vorderachse bei der lastabhängigen EBL- oder EBD-Regelung der Hinterachse erfolgen, wobei der - lediglich zeitweise auftretende - ABS-Regelfall keine Auswirkung auf die Mitregelung der Vorderachse entfaltet.

Weiterhin wird erkannt, dass bei der erfindungsgemäßen Steuer-Rückführung von der Bremsleitung zu dem Bremsventil auch ein Antriebsschlupfregelungs (ASR)-Eingriff zu Problemen führen kann. Insbesondere könnte bei dem Bremseingriff der ASR-Regelung der Hinterachse durch die Bremsdruckrückführung eine Bremsbetätigung an der Vorderachse durchgeführt werden, die nicht gewollt ist. Dieser ASR-Fall kann erfindungsgemäß z.B. mit relativ geringem Aufwand und überraschend einfach durch die Zusatzschaltung unterbunden werden, indem ein Ventil mit einer Durchlassstellung und Sperrstellung derartig angesteuert wird, dass es bei Betätigung des Bremsventils und somit Druckreduzierung bzw. Belüftung der Bremsdruck-Zuführleitung in Durchlassstellung ist, ohne eine derartige Betätigung und z.B. dennoch druckreduzierter (belüfteter) Bremsleitung oder druckreduzierter (belüfteter) Zuführleitung zu dem Relaisventil jedoch in Sperrstellung geht.

Hierfür sind erfindungsgemäß unterschiedliche Schaltungen vorgesehen, die zum Teil mit Wechselventilen, Doppelabsperrventilen oder geeigneten Kombiventilen vorgesehen sind.

Die erfindungsgemäße Bremsanlage kann insbesondere pneumatisch sein, d.h. eine Druckluft-Bremsanlage; sie kann aber auch eine hydraulische Bremsanlage sein. Somit betrifft sie allgemein fluidbetätigte Bremsanlagen.

Gemäß einer besonderen Ausbildung kann eine Ventileinrichtung vorgesehen sein, die zum einen die Rückschlag-Ventilausbildung zur Verhinderung des ABS-Regelungs-Durchgriffs und weiterhin die Durchlassstellung und Sperrstellung in Abhängigkeit des ASR-Falls in einer gemeinsamen Ventileinrichtung, vorzugsweise in einem einzigen Gehäuse kombiniert und somit einen direkten Anschluss der entsprechenden Fluidleitungen ermöglicht.

Die Erfindung wir im Folgenden anhand der beiliegenden Zeichnungen an einigen Ausführungsformen näher erläutert.

Es zeigen:
- Fig. 1: ein elektropneumatisches Schaltschema einer Druckluft-bremsanlage für ein Nutzfahrzeug mit Rückführung von
- Fig. 2: Bremsdruck von einer Hinterachsbremse und Zusatzschaltung zur Berücksichtigung des ABS-Regelfalls; ein Schaltschema entsprechend Figur 1, jedoch mit Rückführung von Bremsdrücken von beiden Hinterachsbremsen;
- Fig. 3: ein Schaltschema entsprechend Figur 1 mit einem Kombiventil;
- Fig. 4a, 4b: Ausführungsformen des Kombiventils aus Figur 3 in geschnittener Darstellung;
- Fig. 5 - 12: Ausführungsformen einer Druckluft-Bremsanlage mit pneumatischer Rückführ-Steuerleitung unter Berücksichtigung des ABS- und ASR-Regelfalls:

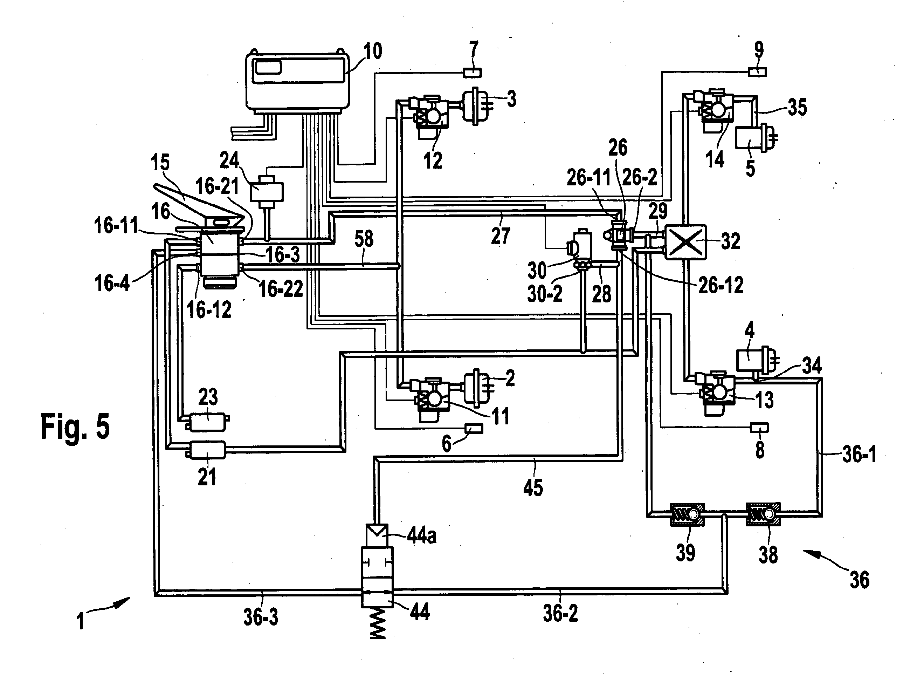

- Fig. 5: ein elektropneumatisches Schaltschema einer Druckluft-Bremsanlage mit Rückführ-Steuerleitung von einer Hinterachs-Bremsleitung und Zusatzschaltung mit zwei Rückschlagventilen und einem 2/2-Wegeventil;

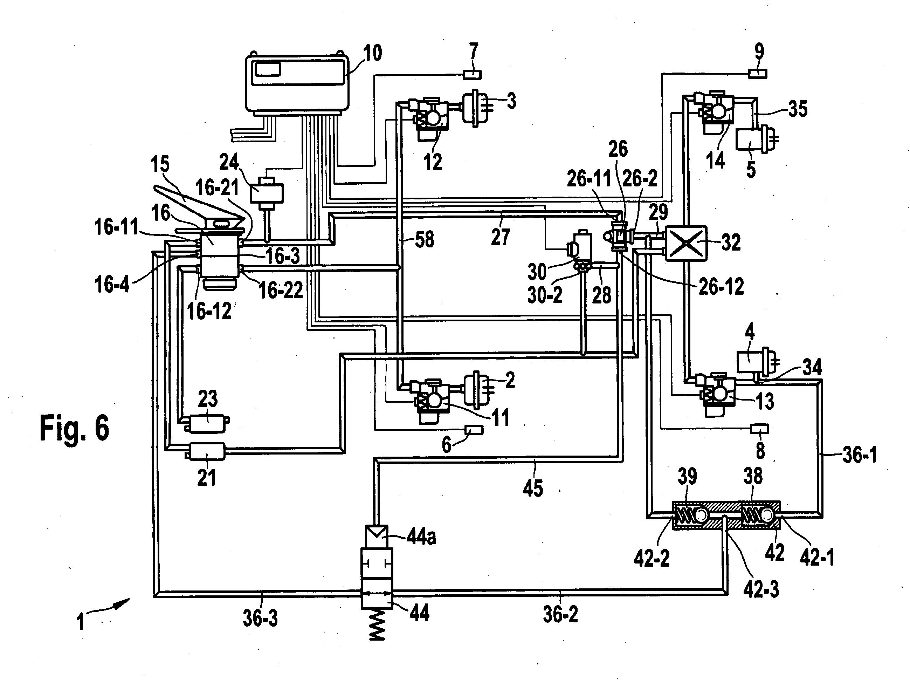

- Fig. 6: ein Schaltschema einer der Figur 5 entsprechenden Ausführungsform mit Kombiventil und 2/2-Wegeventil;

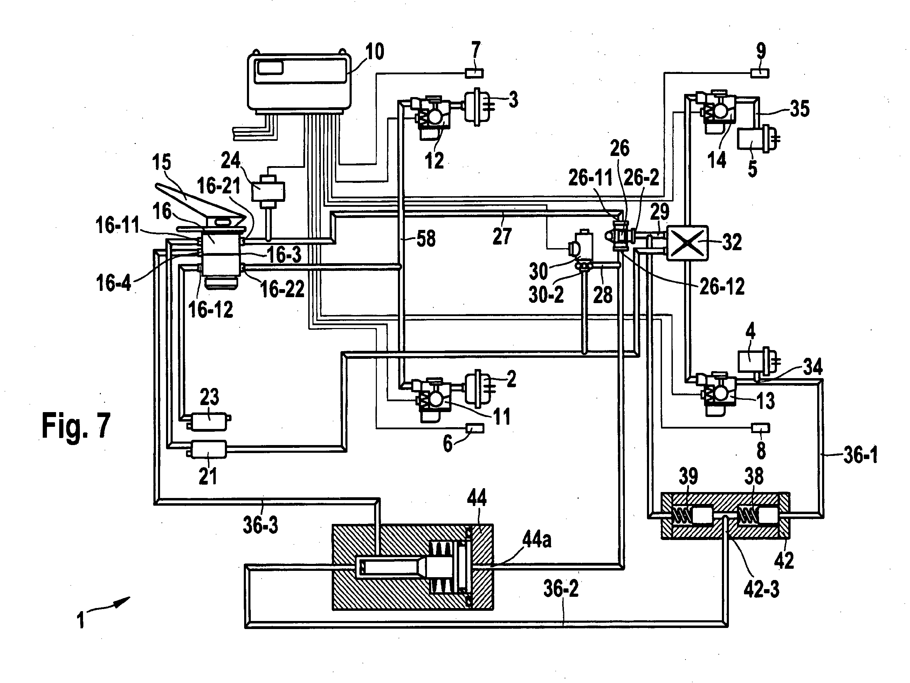

- Fig. 7: die Ausführungsform der Figur 6 bei detaillierterer Darstellung der Ventile der Zusatzschaltung;

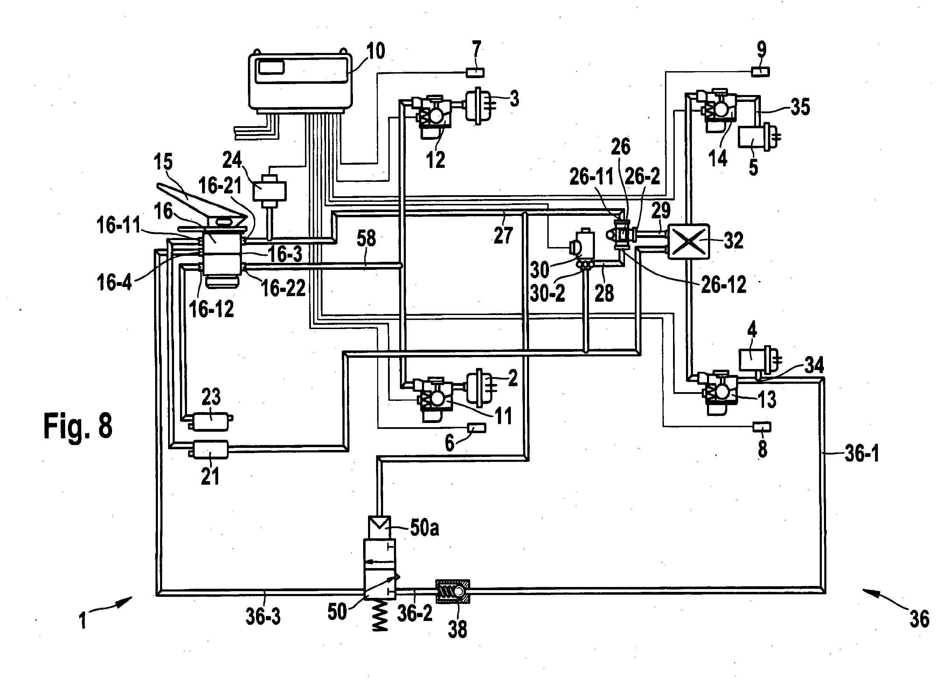

- Fig. 8: ein Schaltschema einer nicht-erfindungsgemäßen Ausführungsform mit Rückschlagventil und 3/2-Wegeventil;

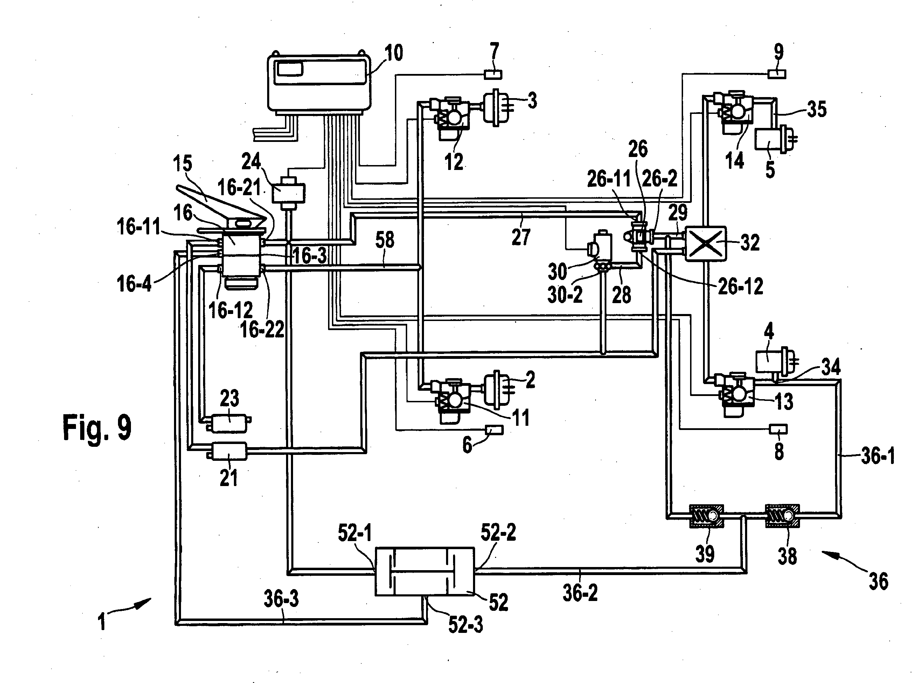

- Fig. 9.: ein Schaltschema mit zwei Rückschlagventilen und einem Doppelabsperrventil;

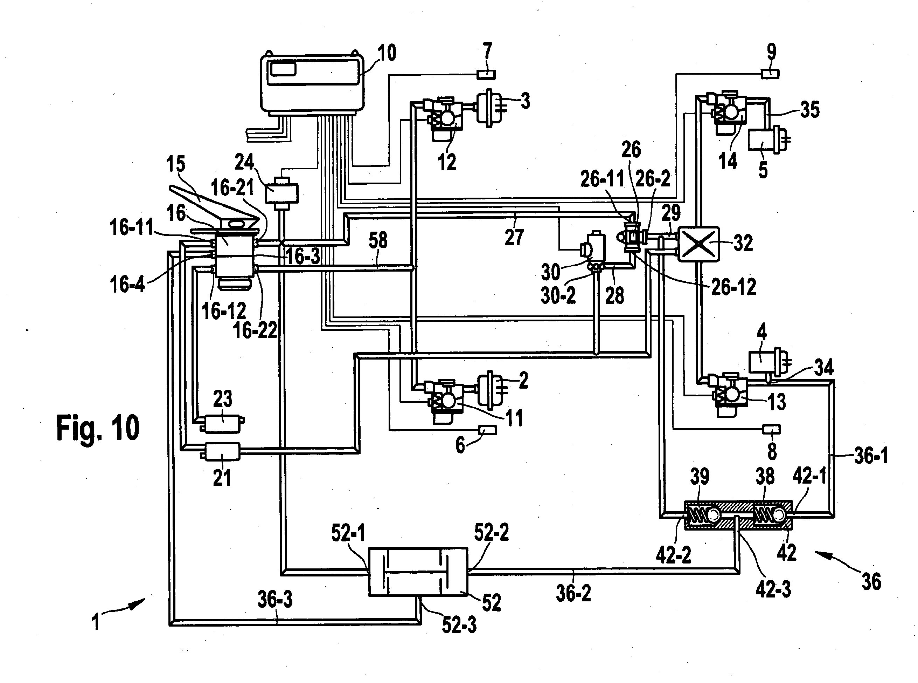

- Fig. 10: ein Schaltschema mit Kombiventil und Doppelabsperrventil;

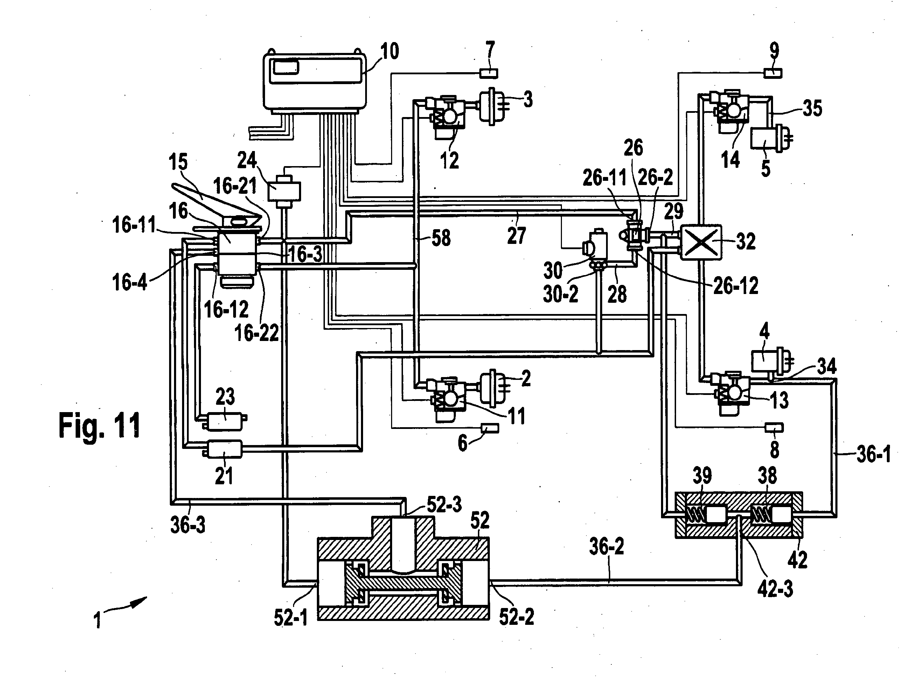

- Fig. 11: das Schaltschema aus Figur 10 bei detaillierter Darstellung der Ventile der Zusatzschaltung;

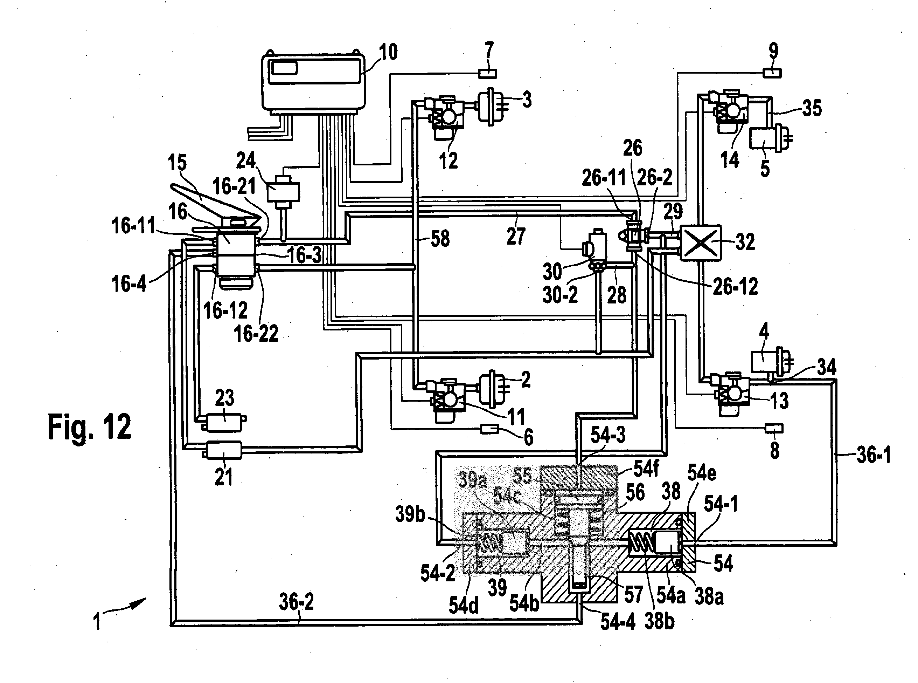

- Fig. 12: ein Schaltschema einer erfindungsgemäßen Bremsanlage mit entsprechender Funktionalität wie Figur 5 bis 11, mit einer erfindungsgemäßen Ventileinrichtung in der Zusatzschaltung der Rückführ-Steuerleitung.

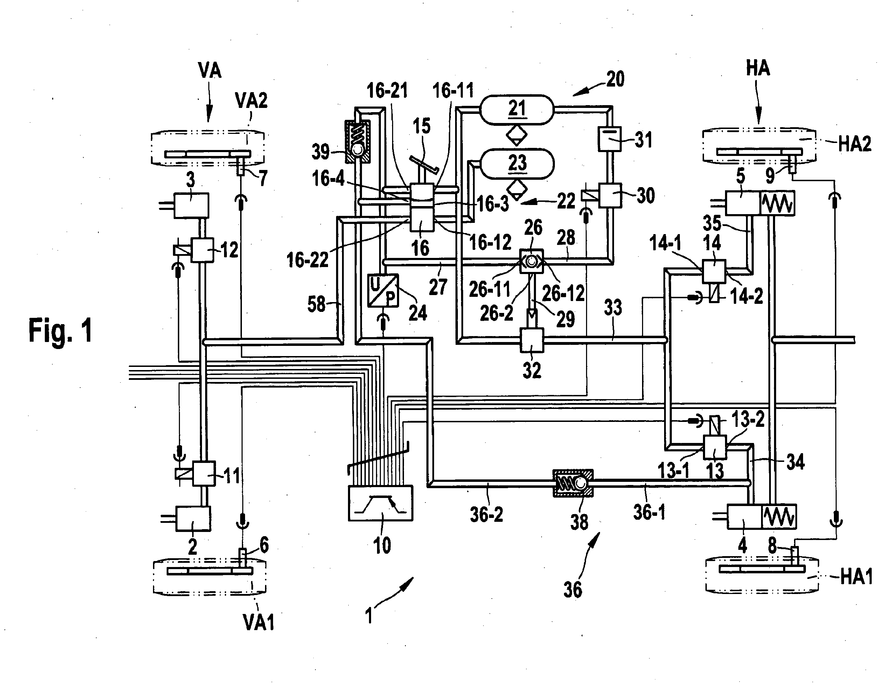

Figur 1 zeigt die wesentlichen Komponenten einer Druckluft- Bremsanlage 1 eines Nutzfahrzeuges mit einer Vorderachse VA mit hier gestrichelt eingezeichneten Vorderachs-Rädern VA1, VA2 und einer angetriebenen Hinterachse HA mit gestrichelt eingezeichnet einem linken Hinterachs-Rad HA1 und einem rechten Hinterachs-Rad HA2. Die Räder VA1, VA2, HA1 und HA2 werden über pneumatische Bremsen gebremst, von denen in Figur 1 die pneumatischen Bremszylinder 2, 3, 4, 5 gezeigt sind. Weiterhin sind in bekannter Weise Drehzahlsensoren 6, 7, 8, 9 an den vier Rädern VA1, VA2, HA1, HA2 zur Messung der Drehzahlen für verschiedene Regelsysteme, insbesondere die ABS-Regelung, vorgesehen, die entsprechend Messsignale an eine elektronische Steuereinrichtung 10 der Druckluft-Bremsanlage 1 ausgeben. In den Druckluftzuleitungen zu den Bremszylindern 2, 3, 4, 5 sind in an sich bekannter Weise ABS-Magnetventile 11, 12, 13, 14 vorgeschaltet, die von der Steuereinrichtung 10 angesteuert werden.

Die gezeigte Druckluft-Bremsanlage 1 weist einen Vorderachs- Bremskreis 22 und einen Hinterachs-Bremskreis 20 auf, die von der Steuereinrichtung 10 separat geregelt werden. Der Fahrer gibt über ein hier nur angedeutetes Bremspedal 15 einen Bremswunsch auf ein Bremsventil 16 ein, das auch als Motorwagen-Bremsventil bezeichnet wird und fünf Anschlüsse 16-11, 16-12, 16-21, 16-22 und 16-4 sowie eine Entlüftung 16-3 aufweist. Die Anschlüsse 16-11 und 16-21 sind für den Hinterachs-Bremskreis 20 vorgesehen, der von einem ersten Druckluftspeicher 21 gespeist wird. Entsprechend sind die Anschlüsse 16-12 und 16-22 für den Vorderachs-Bremskreis 22 vorgesehen, der entsprechend von einem zweiten Druckluftspeicher 23 gespeist wird. Die Druckluftspeicher 21 und 23 werden in an sich bekannter und hier nicht detaillierter dargestellter Weise von einem vom Fahrzeugmotor angetriebenen Kompressor befüllt. Der Anschluss 16-11 ist als Drucklufteinlass zum Bremsventil 16 an den ersten Druckluftspeicher 21 angeschlossen; entsprechend ist der zweite Drucklufteinlass 16-12 des zweiten Bremskreises 22 an den zweiten Druckluftspeicher 23 angeschlossen, wobei entsprechend der Betätigung des Bremspedals 15 Druckluft an die jeweiligen Druckluft-Auslässe 16-21 und 16-22 und somit die angeschlossene Bremsdruckleitung 27 des Hinterachs-Bremskreises 20 bzw. die angeschlossene Bremsdruckleitung 58 des Vorderachs-Bremskreises 22 durchgelassen wird. Der Fahrerbremswunsch wird hierbei ergänzend über einen Drucksensor 24 detektiert, der an die Bremsdruckleitung 27 angeschlossen ist und ein Messsignal an die Steuereinrichtung 10 ausgibt.

An die Bremsdruckleitung 27 des Hinterachs-Bremskreises 20 ist weiterhin ein Zweiwegeventil 26 (Wechselventil) mit seinem ersten Eingang 26-11 angeschlossen, dessen weiterer Eingang 26-12 über eine Leitung 28, ein Differentialventil 30 und ein Rückschlagventil 31 wiederum an den ersten Druckluftspeicher 21 angeschlossen ist. Das Differentialventil 30 ist hierbei als 3/2-Wege- Magnetventil ausgebildet, das von der Steuereinrichtung 10 angesteuert wird. Neben seinen beiden Leistungsanschlüssen weist das Differentialventil 30 weiterhin einen hier nicht gezeigten und als solchen bekannten Entlüftungsanschluss auf, um nach Beendigung der ASR-Regelung die Druckluft aus der Leitung 28 abzulassen. An einen Auslass 26-2 des Zweiwegeventils 26 ist der Steuereingang des Relaisventils 32 angeschlossen, das wiederum mit dem ersten Druckluftspeicher 21 verbunden ist und diesen direkt auf die ABS- Magnetventile 13 und 14 der Hinterachse HA durchschaltet. Das Relaisventil 32 wirkt somit in an sich bekannter Weise zur Durchsatzverstärkung sowie zur Ausbildung kurzer Leitungswege zwischen dem ersten Druckluftspeicher 21 und den ABS-Magnetventilen 13 und 14.

Die Steuereinrichtung 10 führt in an sich bekannter Weise an den vier Rädern ABS-Regelfunktionen durch, wenn sie bei Betätigung der entsprechenden Bremszylinder 2, 3, 4, 5 über die Raddrehzahlsensoren 6, 7, 8, 9 einen Schlupf des betreffenden Rades bzw. der Räder einer Achse erkennt. Weiterhin führt die Steuereinrichtung 10 eine EBL (Electronic Brake Limiter, elektronische Bremskraftbegrenzung) - Regelfunktion durch. Die EBL- Regelfunktion wird über die ABS-Magnetventile 11, 12, 13, 14 durchgeführt. Die EBL stellt hierbei eine lastabhängige Bremskraftbegrenzung dar, die insbesondere an der Hinterachse relevant ist, da dort die unterschiedlichen Beladungen zu stärkeren Unterschieden der Achslasten und somit der Blockierneigung führen. Wenn die Steuereinrichtung 10 erkennt, dass der Bremsdruck bzw. Luftdruck in der Bremsdruck-Zuführleitung 33 zu den ABS- Magnetventilen 13, 14 groß genug ist und der Fahrer über das Bremsventil 16 eine weitere Bremserhöhung wünscht, da der Druck am Ausgang 16-21 weiter gesteigert wird, so steuert die Steuereinrichtung 10 die ABS- Magnetventile 13, 14 derartig an, dass ihre Eingänge 14-1 und 13-1 geschlossen werden und ihre zu den Bremszylindern 4 und 5 führenden Anschlüsse 13-2 und 14-2 geschlossen bleiben, so dass der in den Bremsleitungen 34, 35 zu den Bremszylindern 4 und 5 stehende Bremsdruck eingesperrt wird. Die Anschlüsse 13-2 und 14-2 werden somit nicht an den Druckluftauslass zur Entlüftung angeschlossen, wie dies bei einer ABS-Regelung zur Freigabe der Bremsen bei Erkennen eines Blockierens erfolgt. Es wird vielmehr der Bremsdruck auf dem bereits eingestellten Wert festgehalten, so dass ein Blockieren erst gar nicht eintritt.

Erfindungsgemäß ist an die Bremsleitung 34 und/oder die Bremsleitung 35 eine pneumatische Rückführ-Steuerleitung 36 angeschlossen. Gemäß Figur 1 ist die Rückführ-Steuerleitung 36 lediglich an die linke Bremsleitung 34 angeschlossen und führt zu dem Steuer-Anschluss bzw. Steuer-Eingang 16-4 des Bremsventils 16. Über den Steuer-Eingang 16-4 wird hierbei in dem Bremsventil 16 der Kolben, der die Druckluftausgabe über den Ausgang 16-22 steuert, mit Druckluft beaufschlagt, so dass eine Rückkopplung des Bremsdruckes auf das Bremsventil 16 derartig erfolgt, dass die Vorderachse VA mitgeregelt wird. Derartige Ansteuerungen des Bremsventils 16 über einen Steuer-Eingang 16-4 sind grundsätzlich bereits aus ALB- Regelungen bekannt.

Erfindungsgemäß ist in der Rückführ-Steuerleitung 36 eine Zusatzschaltung vorgesehen, wobei in Figur 1 zunächst ein Rückschlagventil 38 derartig zwischen die Teil-Leitungen 36-1 und 36-2 geschaltet ist, dass eine Druckluft-Rückführung vom Anschluss 16-4 zu der Leitung 34 ausgeschlossen wird. Weiterhin ist ein weiteres Rückschlagventil 39 zwischen dem Anschluss 16-4 und z. B. dem Anschluss 16-21 derartig vorgesehen, dass eine Entlüftung des an dem Anschluss 16-4 anstehenden Bremsdrucks über den Anschluss 16-21 und die Entlüftung 16-3 des Bremsventils 16 ermöglicht ist.

Im Folgenden wird die Wirkung der Rückführ-Steuerleitung 36 anhand von Figur 1 erklärt. Wenn die Steuereinrichtung 10 erkennt, dass in den Bremsleitungen 34, 35 und somit in den Bremszylindern 4, 5 der Hinterachse HA bereits ein hinreichender Bremsdruck vorliegt und eine weitere Bremsdruckerhöhung ggf. zu einer Blockierneigung der Hinterachsbremsen führen könnte, was insbesondere bei einer geringeren Last auf der Hinterachse HA auch bei kleineren Bremsdrücken erfolgen kann, und vom Fahrer über das Bremsventil 16 ein höherer Bremsdruck bzw. stärkere Bremsung erwünscht ist, so erkennt die Steuereinrichtung 10, dass der Bremsdruck in den Leitungen 34, 35 nicht weiter gesteigert werden sollte und steuert im Rahmen der EBL-Regelung die ABS-Ventile 13, 14 derartig an, dass ihr Eingang und Ausgang geschlossen ist und somit der Bremsdruck in den Bremsleitungen 34, 35 festgehalten bzw. eingesperrt wird. Somit wird gemäß Figur 1 über die Rückführ- Steuerleitungen 36 bzw. 36-1, 36-2 bei geöffnetem Rückschlagventil 38 dieser Bremsdruck auf den Anschluss 16-4 des Bremsventils 16 eingegeben, so dass über diese Rückführung das Bremsverhalten an der Vorderachse VA in Abhängigkeit von der Achslast der Hinterachse HA mitgeregelt werden kann.

Das Rückschlagventil 38 verhindert hierbei, dass im ABS-Regelfall des ABS-Magnetventils 13 in ungewollter Weise diese ABS-Regelung über den Steuereingang 16-4 zur Regelung der Vorderachse VA Einfluss findet. Bei der ABS-Regelung wird am ABS-Magnetventil 13 bei Erkennung eines beginnenden Blockierens des linken Hinterrades HA1 der Eingang 13-1 des ABS- Magnetventils 13 geschlossen und weiterhin - anders als bei der oben beschriebenen EBL-Regelung - das Auslassventil bzw. Entlüftungsventil des ABS- Magnetventils geöffnet, so dass der in der Bremsdruckleitung 34 anstehende Bremsdruck über das ABS- Magnetventil 13 nach außen entweichen kann und das Hinterrad HA1 nachfolgend wieder von der Straße erfasst und gedreht werden kann. Beim Entlüften der Bremsdruckleitung 34 über das ABS- Magnetventil 13 fällt somit der Bremsdruck in der Bremsdruckleitung 34 ab, so dass das Rückschlagventil 38 sofort sperrt und somit in der linken Teil-Leitung 36-2, die an dem Steueranschluss 16-4 des Bremsventils 16 anliegt, der Druck festgehalten wird. Die ABS-Regelung an der Hinterachse HA führt somit zu keinem Einfluss auf die Steuerrückführung zur Mitregelung der Vorderachse VA.

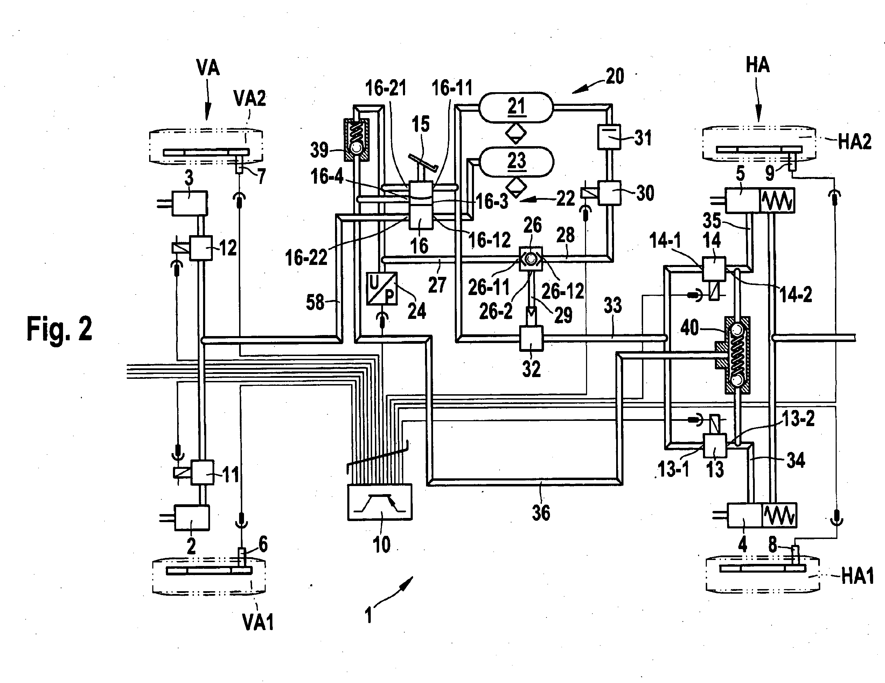

In Figur 1 wird lediglich der Druck der linken Bremsleitung 34 der Hinterachse HA zur Steuerrückführung verwendet. In Figur 2 ist ein Doppelrückschlagventil (Wechselventil) 40 zwischen den Bremsleitungen 34 und 35 vorgesehen, dessen dritter Anschluss an die Rückführ-Steuerleitung 36 angeschlossen ist, die wiederum an den Anschluss 16-4 gelegt ist, der über das Rückschlagventil 39 wie in Figur 1 entlüftet werden kann. Somit legt immer die Bremsleitung 34 oder 35 mit dem höheren Bremsdruck diesen Bremsdruck auf die Steuerleitung 36. Falls eine der beiden Bremsleitungen im ABS-Regelfall entlüftet wird, schließt das Doppelrückschlagventil 40 zu dieser Bremsleitung hin. Das Doppelrückschlagventil 40 weist, wie aus der symbolischen Darstellung der Fig. 2 ersichtlich ist, vorteilhafterweise zwei Dichtelemente auf, damit es auch bei einem Druckabfall an beiden Bremsleitungen sperrt.

Somit wird im EBL-Fall über das Doppelrückschlagventil (Wechselventil) 40 der höhere Bremsdruck der Leitung 34 und 35 über die Rückführ- Steuerleitung 36 zurückgeführt. Im ABS-Regelfall an einer oder an beiden Hinterachsseiten bleibt in der Rückführ-Steuerleitung 36 der vor Auftreten des ABS-Falls ausgesteuerte höhere Bremsdruck erhalten

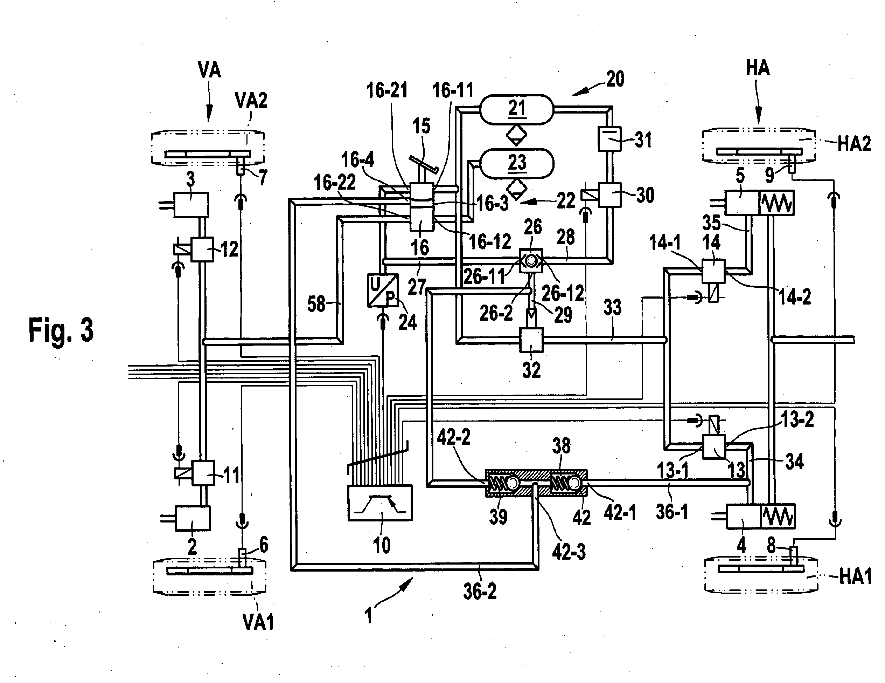

Figur 3 zeigt eine weitere Ausführungsform, bei der - rein der Übersicht halber - lediglich von der linken Bremsdruckleitung 34 zurückgeführt wird. Figur 1 und Figur 3 können entsprechend z. B. auch über die rechte Bremsleitung 35 erfolgen, weiterhin kann Fig. 3 mit Fig. 2 kombiniert werden. In Figur 3 ist ein Kombiventil 42 angeschlossen, das die beiden Rückschlagventile 38 und 39 enthält. Die Funktionalität der Rückschlagventile 38 und 39 in dem Kombiventil 42 entspricht somit der Funktionalität der Rückschlagventile 38 und 39 in Figur 1. Entsprechend wird über den mittleren Anschluss 42-3 des Kombiventils 42 der Steueranschluss 16-4 angesteuert.

In Fig. 3 ist das der Entlüftung dienende Rückschlagventil 39 an die Leitung 29 angeschlossen, die von dem Zweiwegeventil 26 zu dem Relaisventil 32 verläuft. Eine Entlüftung erfolgt über das Rückschlagventil 39 und das Zweiwegeventil (Wechselventil) 26. Grundsätzlich sind hier auch andere Anschlüsse des zur Entlüftung dienenden Rückschlagventils 39 möglich.

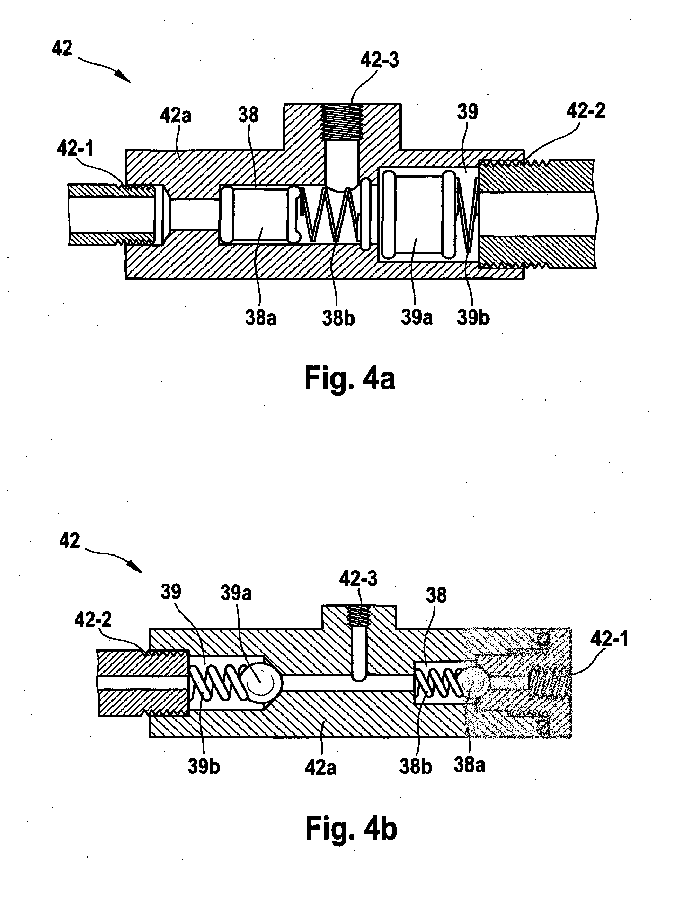

Die Figuren 4a und 4b zeigen mögliche Ausführungen des Kombiventils 42, wobei in dem Gehäuse 42a entsprechende Bohrungen, Rückschlagventil-Körper 38a und 39a sowie entsprechende Rückschlagventilfedern 38b und 39b aufgenommen sind. In Figur 4a sind die Rückschlagventilkörper 38a, 39a als Gummikörper ausgebildet, in Figur 4b entsprechend als Ventilkugeln, die gegen die entsprechenden Ventilsitze im Ventilgehäuse 42a gedrückt werden. Das Kombiventil 42 kann somit im Prinzip als Doppelrückschlagventil (Wechselventil), bei dem das Rückschlagventil 39 revers bzw. invers angeordnet ist, oder entsprechend als Doppelabsperrventil mit inversem Rückschlagventil 38 dargestellt und auch ausgebildet werden. Die Herstellung ist somit durch entsprechenden umgekehrten Einbau jeweils eines Rückschlagventils sehr einfach und kostengünstig.

In den Figuren 5 ff ist die Darstellung der Druckluft-Bremsanlage 1 etwas vereinfacht, um die Anschaulichkeit zu erhöhen. In Figur 5 sind wiederum die Rückschlagventile 38 und 39 gemäß Figur 1 eingezeichnet, wobei in die Rückführ-Steuerleitung 36 ergänzend ein 2/2- Wegeventil 44 zwischen dem Steuer-Anschluss 16-4 und dem Ausgang des Rückschlagventils 38 bzw. somit an die Teil-Leitung 36-2 der Figur 1 angeschlossen ist. Das Ventil 44 wirkt somit als Sperrventil 44, dessen Steuereingang 44a pneumatisch über eine Leitung 45 an die Leitung 28 angeschlossen ist und somit von einem Anschluss 26-12 des Zweiwegeventils 26 sowie dem Anschluss 30-2 des Differentialventils 30 angesteuert wird. Im gezeigten Ruhezustand ist das Sperrventil 44 in Durchlassstellung, so dass die Funktionalität derjenigen der Figur 1 und 3 entspricht: im EBL-Fall erfolgt die Rückführung auf den Steueranschluss 16-4 des Bremsventils 16, um eine Mitregelung der Vorderachse in Abhängigkeit von der Achslast der Hinterachse HA zu ermöglichen. Im ABS-Regelfall sperrt das Rückschlagventil 38. Bei normaler Betätigung des Bremsventils 16 durch den Fahrer wird somit die Bremsdruckleitung 27 durch den Ausgang 16-21 belüftet, so dass der Eingang 26-11 des Zweiwegeventils 26 durchsteuert und den Anschluss 26-12 schließt, so dass das Relaisventil 32 über die Bremsdruckleitung 27 angesteuert und durchgeschaltet wird. Somit ist die Leitung 28 drucklos, an die in Figur 5 über die Druckluftleitung 45 der Anschluss 44a angeschlossen ist. Somit verbleibt bei einer Bremsbetätigung des Bremsventils 16 das Sperrventil 44 in der gezeigten Durchlass-Ruhestellung, so dass die Funktionalität der Figur derjenigen der Figur 1 und 3 entspricht.

Figur 5 berücksichtigt jedoch ergänzend den ASR-Regelfall, bei dem an dem Drehzahlsensor 8 erkannt wird, dass das linke Rad der Hinterachse HA und somit die angetriebene Hinterachse HA zum Schlupf- bzw. Antriebsschlupf neigt und somit in an sich bekannter Weise über das ABS- Magnetventil 13 abgebremst wird. Somit wird im ASR-Regelfall bei einem zu großen Antriebsschlupf am linken Hinterachsrad das ABS-Magnetventil 13 (entsprechend auf der rechten Seite bei einem dortigen ASR-Regelfall das ABS-Magnetventil 14) betätigt, ohne dass eine Betätigung des Bremsventils 16 erfolgt, so dass die Bremsdruckleitung 27 nicht mit Bremsdruck beaufschlagt ist. Somit wird über das Differentialventil 30 das Zweiwegeventil (Wechselventil) 26 über seinen Anschluss 26-12 ausgesteuert, so dass die Leitung 45 belüftet wird und das 2/2-Wegeventil 44 durchschaltet in die Sperrstellung, so dass die Rückführleitung zwischen den Leitungsbereichen 36-2 und 36-3 gesperrt wird, so dass im ASR-Regelfall keine Steuerrückführung erfolgt.

In Figur 6 ist wiederum das Kombiventil 42 vorgesehen, das gemäß der hier gezeigten Darstellung allerdings an die Bremsleitung 34 und zur Entlüftung an den Anschluss des Zweiwegeventils 26 angeschlossen ist, der an das Relaisventil 32 angeschlossen ist, so dass eine Entlüftung über das Zweiwegeventil 26 möglich ist.

Figur 7 zeigt die Ausbildung der Ventile 42 und 44 aus Figur 6 in einer beispielhaften Darstellung.

In der nicht-erfindungsgemäßen Ausführungsform der Figur 8 ist zwischen dem Rückschlagventil 38 und dem Steueranschluss 16-4 ein 3/2 Wegeventil 50 angeschlossen, dass pneumatisch von dem Ausgang 16-21 des Bremsventils 16 angesteuert wird. In der gezeigten Ruhestellung ist die Rückführ-Steuerleitung 36 durch das 3/2-Wegeventil 50 bzw. Sperrventil gesperrt. Bei einer Bremsbetätigung des Fahrers wird die Bremsdruckleitung 27 über den Ausgang 16-21 des Bremsventils 16 belüftet und somit das 3/2-Wegeventil 50 in seine geöffnete Stellung verstellt, so dass wie oben mit Bezug zu Figur 1, 3 beschrieben die EBL-Regelung erfolgen kann und das Rückschlagventil 38 im ABS-Regelfall sperrt. Im ASR-Fall liegt wiederum keine Bremsbetätigung vor, so dass die Leitung 27 nicht mit Bremsdruck beaufschlagt ist und somit das 3/2- Wegeventil 50 in der gezeigten Ruhestellung ist, so dass keine unzulässige Mitregelung der Vorderachse erfolgt. Die Leitungslänge der Teil-Leitung 36-2 zwischen den Ventilen 38 und 50 sollte hierbei gering gehalten werden, damit sich hier kein höheres Druckluftvolumen aufbaut, das bei Sperren des Rückschlagventils 38 im ABS-Fall und durchgeschaltetem 3/2-Wegeventil 50 auf den Steueranschluss 16-4 eine nicht vorgesehene Steuerung ausübt.

In der Ausführungsform der Figur 9 ist wie in Fig. 3 das der Entlüftung dienende Rückschlagventil 39 an die Leitung 29 angeschlossen. Weiterhin ist bei dieser Ausführungsform ein Doppelabsperrventil 52 mit seinen Eingängen 52-1 und 52-2 zwischen die Rückführ-Steuerleitung 36-2 und die Bremsdruckleitung 27 bzw. den Ausgang 16-21 des Bremsventils 16 geschaltet. Der Ausgang 52-3 des Doppelabsperrventils ist entsprechend über die Leitung 36-3 an den Steueranschluss 16-4 des Bremsventils 16 gelegt. Bei dem Doppelabsperrventil 52 wird jeweils die Leitung 36-2 oder 27 mit dem geringeren Druck auf die Leitung 36-3 gelegt. Im EBL-Regelfall wird der in der Bremsdruckleitung 27 anstehende Luftdruck höher sein als der von dem Relaisventil 32 über das durchgeschaltete ABS-Magnetventil 13 und das Rückschlagventil 38 auf die Leitung 36-2 gesetzte Druck; selbst bei etwa gleichem Druck wird somit dieser Bremsdruck auf die Leitung 36-3 und somit den Steueranschluss 16-4 gelegt, so dass die gewollte Rückführung zur Mitregelung der Vorderachse erfolgt. Im ABS-Regelfall sperrt wie oben beschrieben das Rückschlagventil 38, wenn das ABS-Magnetventil 13 die Bremsleitung 34 und somit den Bereich 36-1 der Rückführ-Steuerleitung 36 entlüftet. Da auch das an die Druckluftleitung 29 angeschlossene Rückschlagventil 39 zu der Leitung 36-2 hin sperrt, liegt in dieser Leitung 36-2 der geringere Luftdruck an als in der Bremsdruckleitung 27 bzw. dem Ausgang 16-21, so dass das Doppelabsperrventil 52 zur Leitung 36-2 hin öffnet und dieser geringe Luftdruck auf den Steueranschluss 16-4 gelegt wird. Im ASR-Eingriffsfall wird keine Druckluft aus dem Ausgang 16-21 des Bremsventils 16 ausgegeben, so dass über diesen drucklosen Anschluss 52-1 des Doppelabsperrventils 52 durchgeschaltet wird auf die Steuerrückführleitung 36-3, so dass entsprechend kein Luftdruck auf dem Steueranschluss 16-4 des Bremsventils 16 anliegt.

Figur 10 zeigt eine der Figur 9 entsprechende Ausführungsform, bei der die Rückschlagventile 38 und 39 wiederum in einem Kombiventil 42 entsprechend den oben beschriebenen Ausführungsformen, z. B. Figur 3, aufgenommen sind. Figur 11 zeigt eine entsprechende Ausführungsform mit Schnittdarstellungen dieser Ventile 42 und 52.

Figur 12 zeigt eine weitere Ausführungsform, bei dem eine erfindungsgemäße Ventileinrichtung 54 die Zusatzschaltung in der Rückführ- Steuerleitung 36 bildet. Die Ventileinrichtung 54 weist hierbei die Rückschlagventile 38 und 39 gemäß den oben beschriebenen Ausführungsformen auf, die z. B. entsprechend Figur 9 geschaltet sind, d. h. zwischen die Bremsleitung 34 und die Druckluftleitung 29 und in der dort beschriebenen Anordnung; die Ventileinrichtung 54 ist somit mit ihren Anschlüssen 54-2 an die Leitungen 29 und 54-1 an die Bremsleitung 34 angeschlossen. Weiterhin weist die Ventileinrichtung 54 einen Steuereingang 54-3 auf, der an die Leitung 28 zwischen dem Differentialventil 30 und dem Zweiwegeventil 26, d.h. an dessen Anschluss 26-12, angeschlossen ist. Der Ausgang 54-4 der erfindungsgemäßen Ventileinrichtung 54 ist an den Steueranschluss 16-4 des Bremsventils 16 angeschlossen. Die Ventileinrichtung 54 weist hierbei ein Gehäuse 54a mit einer in Figur 12 horizontalen Bohrung 54b, in der die Rückschlagventile 38 und 39 - entsprechend dem oben beschriebenen Kombiventil 42 - eingesetzt sind, weiterhin eine in Figur 12 vertikal eingezeichnete zweite Bohrung 54c, in der ein Steuerkolben 55 mitsamt Rückstellfeder 56 aufgenommen sind, die Bohrungen 54b und 54c kreuzen sich hierbei und gehen somit ineinander über. Die Bohrung 54b weist nach außen hin jeweils zwei Verbreiterungen als Kammern auf, in die die Rückschlagventile 38, 39 mit den Ventilkörpern 38a, 39a und Ventilfedern 38b, 39b eingesetzt sind, die nach außen durch Deckel 54d und 54e verschlossen und mit Dichtungen, z. B. O-Ringen abgedichtet sind. Entsprechend ist die vertikale Kammer 54c nach oben verbreitert und mit einem Deckel 54f verschlossen sowie mit einer Dichtung, z. B. O-Ring abgedichtet.

Der Steuerkolben 55 dient dazu, bei Betätigung, d. h. bei Eingangsdruck an dem Steuereingang 54-3, gegen einen gehäuseseitigen Ventilsitz 57 zu gelangen, wobei er bei Druckabfall an dem Steuereingang 54-3 durch die Rückstellfeder 56 wieder in die geöffnete Stellung verstellt wird. Grundsätzlich sind auch andere Anschlüsse des Steuereingangs 54-3, d. h. an andere Leitungen als die Leitung 28 möglich; relevant ist, dass die erfindungsgemäße Funktion erfüllt wird. Die Leitung 28 vom Differentialventil 30 zu dem Zweiwegeventil 26 wird nur dann belüftet, wenn bei fehlender Betätigung des Bremsventils 16 dennoch eine Bremsung an der Hinterachse erwünscht ist, d. h. im ASR-Regelfall. Im ASR-Regelfall schließt somit der Steuerkolben 55 (Ventilkolben), indem er gegen den Ventilsitz 57 gelangt, so dass der Ausgang 54-4 zur Rückführ-Steuerleitung 36-2 geschlossen wird, entsprechend der Funktionalität z. B. des in Figur 5 beschriebenen 2/2-Wegeventils 44, das ebenfalls an die Steuerleitung 28 angeschlossen ist. Gegenüber Figur 5 stellt die Ausführungsform der Figur 12 somit eine Kombination mit einer gemeinsamen Ventileinrichtung 54 dar. Falls die Leitung 28 nicht belüftet ist, d. h. bei normalem Bremsbetrieb, im EBL-Regelfall sowie auch im ABS-Regelfall liegt die Funktionalität gemäß Figur 5 bei geöffnetem 2/2-Wegeventil 44 und somit auch entsprechend Figur 1 und Figur 2 vor.

Die erfindungsgemäße Ventileinrichtung 54 ermöglicht somit, die in die erfindungsgemäße Rückführ-Steuerleitung 36 eingesetzte Zusatzschaltung zu integrieren bzw. kombinieren. Hierdurch können somit auch die Volumina zwischen den einzelnen Ventilen gegenüber den oben beschriebenen Ausführungsformen, insbesondere auch gegenüber Figur 5, gering gehalten werden, und somit Steuereingriffe bei Entspannung dieser Volumina in den Druckluftleitungen zwischen z. B. den Ventilen 38, 39 einerseits und dem Ausgang 54-4 andererseits gering gehalten werden Die erfindungsgemäße Ventileinrichtung 54 kann somit in einem Fahrzeug, z. B. bei einer bereits bestehenden Bremsanlage, an die gezeigten Leitungen 28, 29, 34 und einen Anschluss 16-4 angeschlossen werden und gewährleistet eine volle Funktionalität bei geringem Zwischenvolumina zwischen den Ventilen und verringerter Gefahr von z. B. Beschädigungen der Leitungen zwischen den Ventilen.

Erfindungsgemäß sind weiterhin auch Kombinationen zwischen den gezeigten Ausführungsformen möglich. So können insbesondere die Steuereingänge der Ventile der Zusatzschaltung anders angesteuert werden. Hierbei können z. B. in Fig. 5 bis 7 und Fig. 12 bei den Ventilen 44 und 54 die unbetätigte Grundstellung und die bei Druckbeaufschlagung ihrer Steuereingänge 44a und 54-3 eingestellte Betätigungsstellung vertauscht werden, indem diese Steuereingänge an die Bremsdruckleitung 27 angeschlossen werden und somit bei Betätigung des Bremsventils 16 mit Druck beaufschlagt werden und durchschalten und im ASR-Fall in der Ruhestellung verbleiben.

Vorteilhaft ist jedoch die Auslegung gemäß Fig. 5 bis 7 und 12, in denen das pneumatische Steuersignal zum Sperren der Rückführ-Steuerleitung 36 vom Differential 30 bzw. der Leitung 28 genommen wird, da hierdurch bei einer ASR-Regelung die Rückführung immer direkt gesperrt wird.

## Patentansprüche

1. Bremsanlage für ein Fahrzeug, wobei die Bremsanlage (1) mindestens aufweist:
einen Hinterachs-Bremskreis (20) für Räder (HA1, HA2) einer Hinterachse (HA) des Fahrzeugs;
einen Vorderachs-Bremskreis (22) für Räder (VA1, VA2) einer Vorderachse (VA) des Fahrzeugs;
ein vom Fahrer zu betätigendes Bremsventil (16), das in Abhängigkeit seiner Betätigung Bremsdruck auf die Bremskreise (20, 22) durchschaltet oder freigibt,
ABS-Magnetventile (13, 14) zur ABS-Regelung an Bremszylindern (4, 5) zumindest der Räder (HA1, HA2) der Hinterachse (HA), wobei die ABS- Magnetventile (13, 14) mit Bremszylindern (4, 5) der Hinterachse (HA) über Bremsleitungen (34, 35) verbunden sind, und
eine Steuereinrichtung (10), die die ABS-Magnetventile (13, 14) der Hinterachse (HA) ansteuert zur Durchführung einer ABS-Regelung und zur Durchführung einer elektronischen Bremslast-Regelung zum Sperren der ABS-Magnetventile (13, 14) der Hinterachse (HA) bei Erkennen eines hinreichend hohen Bremsdrucks, wobei von mindestens einer Bremsleitung (34, 35) der Hinterachse (HA) eine Rückführ-Steuerleitung (36; 36-1, 36-2, 36-3) zu einem Steuereingang (16-4) des Bremsventils (16) geführt ist,
in Abhängigkeit der Bremsdruckbeaufschlagung des Steuereingangs (16-4) des Bremsventils (16) ein Bremsdruck in dem Vorderachs-Bremskreis (22) veränderbar ist, und
in der Rückführ-Steuerleitung (36) eine Zusatzschaltung (38, 39, 40, 42, 44, 50, 52, 54) vorgesehen ist, die eine Bremsdruck-Rückführung in die mindestens eine Bremsleitung (34, 35) der Hinterachse (HA) zumindest bei einem Druckabfall in der Bremsleitung (34, 35) durch eine ABS-Regelung blockiert, wobei die Zusatzschaltung ein erstes Rückschlagventil (38) aufweist, das eine Bremsdruck-Rückführung in die mindestens eine an einem Bremszylinder (4, 5) angeschlossene Bremsleitung (34, 35) blockiert, **dadurch gekennzeichnet, dass** die Bremsanlage (1) ein zweites Rückschlagventil (39) zur Druckreduzierung und/oder Entlüftung der Rückführ-Steuerleitung (36, 36-2, 36-3) aufweist, wobei das erste Rückschlagventil (38) zwischen dem zweiten Rückschlagventil (39) und der Bremsleitung (34) geschaltet ist und wobei das zweite Rückschlagventil (39) in der gleichen Richtung sperrt wie das erste Rückschlagventil (38).

2. Bremsanlage (1) nach Anspruch 1, **dadurch gekennzeichnet, dass** der an die Rückführ-Steuerleitung (36) angeschlossene Steuereingang (16-4) des Bremsventils (16) auf eine Kolbenfläche des Bremsventils (16) dahingehend wirkt, dass bei einer Druckerhöhung der Bremsdruck im Vorderachs-Bremskreis (22) steigt.

3. Bremsanlage (1) nach Anspruch 1, **dadurch gekennzeichnet, dass** das erste Rückschlagventil (38) Bestandteil eines Mehrfach- oder Doppel-Rückschlagventils (40) ist.

4. Bremsanlage (1) nach Anspruch 3, **dadurch gekennzeichnet, dass** das erste Rückschlagventil (38) und das zweite Rückschlagventil (39) in einer gemeinsamen Ventileinrichtung (42, 54) aufgenommen sind.

5. Bremsanlage (1) nach einem der Ansprüche 3 bis 4, **dadurch gekennzeichnet, dass** der Steuereingang (16-4) des Bremsventils (16) mit einer Teil-Leitung (36-2) zwischen dem ersten Rückschlagventil (38) und dem zweiten Rückschlagventil (39) verbunden ist.

6. Bremsanlage (1) nach einem der Ansprüche 3 bis 5 **dadurch gekennzeichnet, dass** das zweite Rückschlagventil (39) zwischen einerseits das erste Rückschlagventil (38) oder Mehrfach-Rückschlagventil (40) und andererseits ein Mehrwegeventil (26) oder Wechselventil (26) geschaltet ist, das zur Ansteuerung eines mengenverstärkenden Relaisventils (32) und/oder zur Aufnahme sowohl der Ausgangsleitung (28) eines für eine ASR-Regelung vorgesehenen Differentialventils (30) als auch der von dem Bremsventil (16) ausgehenden Bremsdruckleitung (27) des Hinterachs-Bremskreises (20) vorgesehen ist.

7. Bremsanlage (1) nach einem der vorherigen Ansprüche, **dadurch gekennzeichnet, dass** die Zusatzschaltung bei einem ABS-Regelfall an der mindestens einen Bremsleitung (34, 35) der Hinterachse (HA) selbsttätig die Verbindung zu dem Steuereingang (16-4) des Bremsventils (16) sperrt.

8. Bremsanlage (1) nach einem der vorherigen Ansprüche, **dadurch gekennzeichnet, dass** die Rückführ-Steuerleitung (36, 36-1) nur an eine der beiden Bremsleitungen (34, 35) der Räder der angetriebenen Hinterachse (HA) angeschlossen ist.

9. Bremsanlage (1) nach Anspruch 3, **dadurch gekennzeichnet, dass** die Bremsleitungen (34, 35) der beiden Räder der Hinterachse (HA) über das Doppelrückschlagventil (40) mit der Rückführ-Steuerleitung (36) oder einem Teil der Rückführ-Steuerleitung (36) verbunden sind.

10. Bremsanlage (1) nach einem der vorherigen Ansprüche, **dadurch gekennzeichnet, dass** sie als Druckluft-Bremsanlage (1) mit pneumatisch betätigten Bremszylindern (2, 3, 4, 5) oder als hydraulische Bremsanlage mit hydraulisch betätigten Bremszylindern und hydraulischen Rückführleitungen ausgebildet ist.

11. Bremsanlage (1) nach einem der vorherigen Ansprüche, **dadurch gekennzeichnet, dass** die Zusatzschaltung (38, 39, 40, 42, 44, 50, 52, 54) bei einem Antriebsschlupf-Regelungseingriff bei nicht betätigtem Bremsventil (16) sperrt.

12. Bremsanlage nach Anspruch 11, **dadurch gekennzeichnet, dass** die Zusatzschaltung eine Ventileinrichtung (44, 54) aufweist, die zwischen einer Sperrstellung und Durchlassstellung verstellbar ist und einen druckbetätigten Steuereingang (44a, 54-3) aufweist, wobei die Ventileinrichtung (44, 54) bei Betätigung des Bremsventils (16) und hierdurch bewirkter Druckbeaufschlagung einer Fluidleitung, (27, 28, 58) mindestens eines Bremskreises (20, 22) in der Durchlassstellung und bei Betätigung der Bremsleitung (34, 35) der Hinterachse (HA) ohne Betätigung des Bremsventils (16) und hierdurch bewirkter Druckbeaufschlagung der Fluidleitung (27, 28, 58) des Bremskreises (20, 22) in der Sperrstellung ist.

13. Bremsanlage (1) nach Anspruch 12, **dadurch gekennzeichnet, dass** die Ventileinrichtung ein 2/2-Wegeventil (44) mit Sperrstellung und Durchlassstellung aufweist, wobei der Steuereingang (44a) des 2/2-Wegeventils an eine Fluidleitung (28) angeschlossen ist, deren Druck von der Betätigung des Bremsventils (16) oder eines bei einem Antriebsschlupf-Regeleingriff angesteuerten Ventils (30) z. B. eines Differentialventils (30), abhängt.

14. Bremsanlage (1) nach Anspruch 12, **dadurch gekennzeichnet, dass** die Ventileinrichtung (54) einen über einen pneumatischen Steuereingang (54-3) betätigten Steuerkolben (55) aufweist, der in der Sperrstellung gegen einen Ventilsitz (57) zur Sperrung des Ausgangs (54-4) der Ventileinrichtung (54) gelangt,
wobei die Ventileinrichtung (54) in einem Gehäuse (54a) eine erste durchgängige Bohrung (54b) zur Aufnahme von mindestens zwei Rückschlagventilen (38, 39) und eine weitere Bohrung (54c) zur Aufnahme des Steuerkolbens (55) aufweist.

15. Bremsanlage (1) nach Anspruch 12, **dadurch gekennzeichnet, dass** die Ventileinrichtung ein Doppelabsperrventil (52) aufweist, dessen Eingänge (52-1) und (52-2) zwischen die Bremsleitung (34) und einen Ausgang (16-21) des Bremsventils (16) geschaltet sind und dessen Ausgang (52-3) mit dem Steueranschluss (16-4) des Bremsventils (16) verbunden ist, wobei jeweils der mit geringerem Druck beaufschlagte Eingang (52-1, 52-2) zu dem Ausgang (52-3) durchschaltet.

16. Verfahren zum Betreiben einer Bremsanlage (1) nach einem der vorherigen Ansprüche 1 bis 15, mit mindestens folgenden Schritten:
Ausgabe eines Hinterachs-Bremsdrucks auf eine Bremsdruckleitung (27) eines Hinterachs-Bremskreises (20) in Abhängigkeit einer Betätigung eines Bremsventils (16),
Ausgabe eines Vorderachs-Bremsdrucks auf eine Druckluftleitung eines Vorderachs-Bremskreises (22) in Abhängigkeit der Betätigung des Bremsventils (16),
Messung der Raddrehzahlen an zumindest den Rädern der Hinterachse,
ABS-Regelung zumindest an den Rädern der Hinterachse zur Freigabe eines bei Bremsung blockierenden Rades unter Druckreduzierung einer zu einem Bremszylinder (4, 5) des Rades führenden Bremsleitung (34, 35) durch Ansteuerung eines ABS-Magnetventils (13, 14),
Durchführung einer elektronischen Bremskraftbegrenzung (EBL, EBD) zur Begrenzung des Bremsdrucks in den Bremsleitungen (34, 35) zwischen den ABS-Magnetventilen (13, 14) und den Bremszylindern (4, 5) der Räder der Hinterachse bei Erkennen eines hinreichend hohen Bremsdrucks in zumindest einer der Bremsleitungen (34, 35),
wobei ein Bremsdruck mindestens einer der Bremsleitungen (34, 35) zumindest zeitweise als Steuer-Rückführung zurückgeführt wird auf einen Steuereingang (16-4) des Bremsventils (16) zur Mitregelung des Bremsdrucks in dem Vorderachs-Bremskreis (22), und
in einem ABS-Regelfall, bei dem der Bremsdruck in der Bremsleitung (34, 35) bei Erkennung eines Blockierens eines Rades der Hinterachse reduziert wird, die Steuer-Rückführung des Bremsdrucks in den Steuereingang (16-4) des Bremsventils (16) unterbrochen wird, und wobei
eine Entlüftung des an dem Steuereingang (16-4) anstehenden Bremsdrucks mittels des zweiten Rückschlagventils (39) durchgeführt wird.

17. Verfahren nach Anspruch 16, **dadurch gekennzeichnet, dass** die Steuer-Rückführung des Bremsdrucks weiterhin unterbrochen wird beim Vorliegen eines Antriebsschlupfregelungs-Engriffs, bei dem ohne Betätigung des Bremsventils (16) bei Erkennen eines Antriebsschlupfs mindestens eines Rades der Hinterachse der Bremszylinder (4, 5) des Rades der Hinterachse betätigt wird, z. B. durch Betätigung eines Bremsdruck-Zuführventils (30) und des ABS-Magnetventils (13, 14) des Rades.

18. Verfahren nach Anspruch 16 oder 17, **dadurch gekennzeichnet, dass** ein Bremsdruck in zumindest einem der Bremskreise (20, 22) gemessen wird, und die elektronische Bremskraftbegrenzung in Abhängigkeit des gemessenen Drucks durchgeführt wird, und Raddrehzahlen der Räder der Hinterachse gemessen und die ABS-Regelung und/oder Antriebsschlupfregelung unter Verwendung der ermittelten Raddrehzahlen durchgeführt wird.

19. Verfahren nach einem der Ansprüche 16 bis 18, **dadurch gekennzeichnet, dass** zur Verhinderung einer Steuer-Rückführung im ABS-Regelfall eine Bremsdruckführung von einer an den Steuereingang (16-4) des Bremsventils angeschlossenen Rückführ-Steuerleitung (36) blockiert wird.

20. Verfahren nach einem der Ansprüche 16 bis 19, **dadurch gekennzeichnet, dass** eine Steuerrückführung in einem Antriebsschlupfregelungseingriff verhindert wird, wenn zumindest eine Bremsdruckleitung (27, 58) eines Bremskreises (20, 22) aufgrund Nichtbetätigung des Bremsventils (16) drucklos ist und eine Betätigung mindestens eines Bremszylinders (4, 5) eines Rades der Hinterachse vorliegt.

## Claims

1. Brake system for a vehicle, wherein the brake system (1) has at least:
a rear-axle brake circuit (20) for wheels (HA1, HA2) of a rear axle (HA) of the vehicle;
a front-axle brake circuit (22) for wheels (VA1, VA2) of a front axle (VA) of the vehicle;
a brake valve (16) which is to be actuated by the driver and which, as a function of its actuation,
connects through or releases brake pressure to the brake circuits (20, 22),
ABS solenoid valves (13, 14) for performing ABS control at brake cylinders (4, 5) of at least one of the wheels (HA1, HA2) of the rear axle (HA),
wherein the ABS solenoid valves (13, 14) are connected to brake cylinders (4, 5) of the rear axle (HA) via brake lines (34, 35), and
a control device (10) which actuates the ABS solenoid valves (13, 14) of the rear axle (HA) to carry out an ABS control process and to carry out an electronic brake load control process to shut off the ABS solenoid valves (13, 14) of the rear axle (HA) when a sufficiently high brake pressure is detected, wherein a feedback control line (36; 36-1, 36-2, 36-3) is led to a control input (16-4) of the brake valve (16) from at least one brake line (34, 35) of the rear axle (HA),
a brake pressure in the front-axle brake circuit (22) can be changed as a function of the application of brake pressure of the control input (16-4) of the brake valve (16), and
an additional circuit (38, 39, 40, 42, 44, 50, 52, 54), which blocks feedback of brake pressure into the at least one brake line (34, 35) of the rear axle (HA) at least in the event of a drop in pressure in the brake line (34, 35) by means of an ABS control process, is provided in the feedback control line (36), wherein the additional circuit has a first non-feedback valve (38) which blocks feedback of brake pressure into the at least one brake line (34, 35) which is connected to a brake cylinder (4, 5), **characterized in that** the brake system (1) has a second non-feedback valve (39) for reducing pressure and/or venting the feedback control line (36, 36-2, 36-3), wherein the first non-feedback valve (38) is connected between the second non-feedback valve (39) and the brake line (34), and wherein the second non-feedback valve (39) blocks in the same direction as the first non-feedback valve (38).

2. Brake system (1) according to Claim 1, **characterized in that** the control input (16-4), connected to the feedback control line (36), of the brake valve (16) acts on a piston face of the brake valve (16) in such a way that in the event of an increase in pressure the brake pressure in the front-axle brake circuit (22) rises.

3. Brake system (1) according to Claim 1, **characterized in that** the first non-feedback valve (38) is a component of a multiple or double non-feedback valve (40).

4. Brake system (1) according to Claim 3, **characterized in that** the first non-feedback valve (38) and the second non-feedback valve (39) are incorporated into a common valve device (42, 54).

5. Brake system (1) according to one of Claims 3 to 4, **characterized in that** the control input (16-4) of the brake valve (16) is connected to a component line (36-2) between the first non-feedback valve (38) and the second non-feedback valve (39).

6. Brake system (1) according to one of Claims 3 to 5, **characterized in that** the second non-feedback valve (39) is connected between, on the one hand, the first non-feedback valve (38) or multiple non-feedback valve (40), and, on the other hand, a multiple-path valve (26) or alternating check valve (26) which is provided for actuating a quantity-boosting relay valve (32) and/or for receiving both the output line (28) of a differential valve (30) which is provided for a traction control system and the brake pressure line (26), starting from the brake valve (16), of the rear-axle brake circuit (20).

7. Brake system (1) according to one of the preceding claims, **characterized in that** in the event of an ABS control situation at the at least one brake line (34, 35) of the rear axle (HA) the additional circuit automatically blocks the connection to the control input (16-4) of the brake valve (16).

8. Brake system (1) according to one of the preceding claims, **characterized in that** the feedback control line (36, 36-1) is connected only to one of the two brake lines (34, 35) of the wheels of the driven rear axle (HA).

9. Brake system (1) according to Claim 3, **characterized in that** the brake lines (34, 35) of the two wheels of the rear axle (HA) are connected to the feedback control line (36) or to part of the feedback control line (36) via the double non-feedback valve (40).

10. Brake system (1) according to one of the preceding claims, **characterized in that** said brake system (1) is embodied as a compressed air brake system (1) with pneumatically actuated brake cylinders (2, 3, 4, 5) or as a hydraulic brake system with hydraulically actuated brake cylinders and hydraulic feedback lines.

11. Brake system (1) according to one of the preceding claims, **characterized in that** the additional circuit (38, 39, 40, 42, 44, 50, 52, 54) blocks in the event of a traction control intervention when the brake valve (16) is not actuated.

12. Brake system according to Claim 11, **characterized in that** the additional circuit has a valve device (44, 54) which can be adjusted between a closed position and an open position, and has a pressure-actuated control input (44a, 54-3), wherein when the brake valve (16) is actuated and there is a resulting application of pressure to a fluid line (27, 28, 58) of at least one brake circuit (20, 22) the valve device (44, 54) is in the open position, and when the brake line (34, 35) of the rear axle (38) is actuated without actuation of the brake valve (16) and resulting application of pressure to the fluid line (27, 28, 58) of the brake circuit (20, 22) the valve device (44, 54) is in the closed position.

13. Brake system (1) according to Claim 12, **characterized in that** the valve device has a 2/2-way valve (44) with a closed position and an open position, wherein the control input (44a) of the 2/2-way valve is connected to a fluid line (28) whose pressure depends on the actuation of the brake valve (16) or of a valve (30), for example a differential valve (30), actuated in the case of a traction control intervention.

14. Brake system (1) according to Claim 12, **characterized in that** the valve device (54) has a control piston (55) which is actuated by means of a pneumatic control input (54-3) and which moves, in the closed position, against a valve seat (57) in order to block the output (54-4) of the valve device (54),
wherein the valve device (54) has, in a housing (54a), a first continuous drilled hole (54b) for receiving at least two non-feedback valves (38, 39), and a further drilled hole (54c) for receiving the control piston (55).

15. Brake system (1) according to Claim 12, **characterized in that** the valve device has a double shut-off valve (52), the inputs (52-1) and (52-2) of which are connected between the brake line (34) and an output (16-21) of the brake valve (16), and the output (52-3) of which is connected to the control connection (16-4) of the brake valve (16), wherein in each case the input (52-1, 52-2) to which relatively low pressure is applied connects through to the output (52-3).

16. Method for operating a brake system (1) according to one of the preceding Claims 1 to 15, having at least the following steps:
outputting a rear-axle brake pressure to a brake pressure line (27) of a rear-axle brake circuit (20) as a function of an actuation of a brake valve (16),
outputting a front-axle brake pressure to a compressed air line of a front-axle brake circuit (22) as a function of the actuation of the brake valve (16),
measuring the wheel speeds at at least the wheels of the rear axle,
performing ABS control at least at the wheels of the rear axle in order to release a wheel which blocks during braking, while reducing the pressure of a brake line (34, 35) leading to a brake cylinder (4, 5) of the wheel, by actuating an ABS solenoid valve (13, 14),
carrying out electronic braking force limitation (EBL, EBD) in order to limit the brake pressure in the brake lines (34, 35) between the ABS solenoid valves (13, 14) and the brake cylinders (4, 5) of the wheels of the rear axle when a sufficiently high brake pressure is detected in at least one of the brake lines (34, 35), wherein a brake pressure of at least one of the brake lines (34, 35) is fed back at least partially as a control feedback to a control input (16-4) of the brake valve (16) in order to also be involved in controlling the brake pressure in the front-axle brake circuit (22), and
in an ABS control situation in which the brake pressure in the brake line (34, 35) is reduced when blocking of a wheel of the rear axle is detected, the control feedback of the brake pressure into the control input (16-4) of the brake valve (16) is interrupted, and wherein
venting of the brake pressure, present at the control input (16-4), is carried out by means of the second non-feedback valve (39).

17. Method according to Claim 16, **characterized in that** the control feedback of the brake pressure is also interrupted when a traction control intervention is present in which, without actuation of the brake valve (16) when drive slip of at least one wheel of the rear axle is detected the brake cylinder (4, 5) of the wheel of the rear axle is actuated, for example by actuating a brake pressure feed valve (30) and the ABS solenoid valve (13, 14) of the wheel.

18. Method according to Claim 16 or 17, **characterized in that** a brake pressure is measured in at least one of the brake circuits (20, 22) and the electronic limitation of the braking force is carried out as a function of the measured pressure, and wheel speeds of the wheels of the rear axle are measured, and the ABS control and/or traction control are/is carried out using the determined wheel speeds.

19. Method according to one of Claims 16 to 18, **characterized in that** in order to prevent a control feedback in the ABS control situation conduction of brake pressure from a feedback control line (36) which is connected to the control input (16-4) of the brake valve is blocked.

20. Method according to one of Claims 16 to 19, **characterized in that** a control feedback in a traction control intervention is prevented if at least one brake pressure line (27, 58) of a brake circuit (20, 22) is pressureless owing to non-actuation of the brake valve (16), and at least one brake cylinder (4, 5) of a wheel of the rear axle is actuated.

## Revendications

1. Installation de freinage pour un véhicule, l'installation de freinage (1) comportant au moins :
un circuit de frein d'essieu arrière (20) pour les roues (HA1, HA2) d'un essieu arrière (HA) du véhicule ;
un circuit de frein d'essieu avant (22) pour les roues (VA1, VA2) d'un essieu avant (VA) du véhicule ;
une soupape de frein (16) à actionner par le conducteur connectant ou libérant la pression de freinage sur les circuits de frein (20, 22) en fonction de son actionnement ;
des électrovannes ABS (13, 14) permettant une régulation par ABS au niveau des cylindres de frein (4, 5) au moins des roues (HA1, HA2) de l'essieu arrière (HA), les électrovannes ABS (13, 14) étant reliées aux cylindres de frein (4, 5) de l'essieu arrière (HA) via les conduites de frein (34, 35) ; et
un dispositif de commande (10) commandant les électrovannes ABS (13, 14) de l'essieu arrière (HA) pour la réalisation d'une régulation par ABS et la réalisation d'un réglage électronique de la charge de frein en vue de verrouiller les électrovannes ABS (13, 14) de l'essieu arrière (HA) lors de la détection d'une pression de freinage suffisamment élevée, une conduite de commande de reflux (36 ; 36-1, 36-2, 36-3) étant amenée à une entrée de commande (16-4) de la soupape de frein (16) depuis au moins une conduite de frein (34, 35) de l'essieu arrière (HA) ;
une pression de freinage pouvant varier dans le circuit de frein d'essieu avant (22) en fonction de l'alimentation en pression de freinage de l'entrée de commande (16-4) de la soupape de frein (16) ; et
un circuit supplémentaire (38, 39, 40, 42, 44, 50, 52, 54) étant prévu dans la conduite de commande de reflux (36), ledit circuit bloquant par une régulation par ABS un reflux de pression de freinage dans l'au moins une conduite de frein (34, 35) de l'essieu arrière (HA) au moins en cas de chute de pression dans la conduite de frein (34, 35), le circuit supplémentaire comportant une première soupape de retenue (38) bloquant un reflux de pression de freinage dans l'au moins une conduite de frein (34, 35) raccordée à un cylindre de frein (4, 5), **caractérisée en ce que** l'installation de freinage (1) comporte une deuxième soupape de retenue (39) pour la réduction de pression et/ou la purge de la conduite de commande de reflux (36, 36-2, 36-3), la première soupape de retenue (38) étant connectée entre la deuxième soupape de retenue (39) et la conduite de frein (34) et bloquant la deuxième soupape de retenue (39) dans la même direction que la première soupape de retenue (38).

2. Installation de freinage (1) selon la revendication 1, **caractérisée en ce que** l'entrée de commande (16-4), raccordée à la conduite de commande de reflux (36), de la soupape de frein (16) agit sur une surface de piston de la soupape de frein (16) pour qu'en cas d'accroissement de pression, la pression de freinage augmente dans le circuit de frein d'essieu avant (22).

3. Installation de freinage (1) selon la revendication 1, **caractérisée en ce que** la première soupape de retenue (38) fait partie d'une soupape de retenue (40) multiple ou double.

4. Installation de freinage (1) selon la revendication 3, **caractérisée en ce que** la première soupape de retenue (38) et la deuxième soupape de retenue (39) sont logées dans un dispositif de soupape (42, 54) commun.

5. Installation de freinage (1) selon l'une quelconque des revendications 3 à 4, **caractérisée en ce que** l'entrée de commande (16-4) de la soupape de frein (16) est reliée à une conduite partielle (36-2) entre la première soupape de retenue (38) et la deuxième soupape de retenue (39).

6. Installation de freinage (1) selon l'une quelconque des revendications 3 à 5, **caractérisée en ce que** la deuxième soupape de retenue (39) est connectée entre d'une part la première soupape de retenue (38) ou soupape de retenue multiple (40) et d'autre part une soupape à plusieurs voies (26) ou soupape à deux voies (26) prévue pour commander une soupape de relais (32) renforçant les quantités et/ou pour loger tant la conduite de sortie (28) d'une soupape différentielle (30) prévue pour une régulation par ASR que la conduite de pression de freinage (27) du circuit de frein d'essieu arrière (20) partant de la soupape de frein (16).

7. Installation de freinage (1) selon l'une quelconque des revendications précédentes, **caractérisée en ce que** le circuit supplémentaire bloque automatiquement la liaison avec l'entrée de commande (16-4) de la soupape de frein (16) en cas de régulation par ABS au niveau de l'au moins une conduite de frein (34, 35) de l'essieu arrière (HA).

8. Installation de freinage (1) selon l'une quelconque des revendications précédentes, **caractérisée en ce que** la conduite de commande de reflux (36, 36-1) est seulement raccordée à une des deux conduites de frein (34, 35) des roues de l'essieu arrière (HA) entraîné.

9. Installation de freinage (1) selon la revendication 3, **caractérisée en ce que** les conduites de frein (34, 35) des deux roues de l'essieu arrière (HA) sont reliées à la conduite de commande de reflux (36) ou à une partie de la conduite de commande de reflux (36) via la double soupape de retenue (40).

10. Installation de freinage (1) selon l'une quelconque des revendications précédentes, **caractérisée en ce qu'**elle prend la forme d'une installation de freinage à air comprimé (1) équipée de cylindres de frein (2, 3, 4, 5) actionnés de façon pneumatique ou d'une installation de freinage hydraulique équipée de cylindres de frein actionnés de façon hydraulique et de conduites de reflux hydrauliques.

11. Installation de freinage (1) selon l'une quelconque des revendications précédentes, **caractérisée en ce que** le circuit supplémentaire (38, 39, 40, 42, 44, 50, 52, 54) se bloque en cas d'intervention de régulation de patinage à l'entraînement lorsque la soupape de frein (16) n'est pas actionnée.

12. Installation de freinage selon la revendication 11, **caractérisée en ce que** le circuit supplémentaire comporte un dispositif de soupape (44, 54) pouvant être déplacé entre une position bloquée et une position passante et comportant une entrée de commande (44a, 54-3) actionnée par pression, le dispositif de soupape (44, 54) étant dans la position passante lors de l'actionnement de la soupape de frein (16) et donc l'alimentation en pression en découlant d'une conduite de fluide (27, 28, 58) d'au moins un circuit de frein (20, 22) et étant dans la position bloquée lors de l'actionnement de la conduite de frein (34, 35) de l'essieu arrière (HA) sans actionnement de la soupape de frein (16) et l'alimentation en pression en découlant de la conduite de fluide (27, 28, 58) du circuit de frein (20, 22).

13. Installation de freinage (1) selon la revendication 12, **caractérisée en ce que** le dispositif de soupape comporte une soupape à 2/2 voies (44) avec une position bloquée et une position passante, l'entrée de commande (44a) de la soupape à 2/2 voies étant raccordée à une conduite de fluide (28) dont la pression dépend de l'actionnement de la soupape de frein (16) ou d'une soupape (30) commandée par une intervention de régulation de patinage à l'entraînement, par exemple d'une soupape différentielle (30).

14. Installation de freinage (1) selon la revendication 12, **caractérisée en ce que** le dispositif de soupape (54) comporte un piston de commande (55) actionné via une entrée de commande (54-3) pneumatique arrivant dans la position bloquée contre un siège de soupape (57) pour bloquer la sortie (54-4) du dispositif de soupape (54) ;
le dispositif de soupape (54) comportant dans un carter (54a) un premier alésage (54b) traversant logeant au moins deux soupapes de retenue (38, 39) et un alésage (54c) supplémentaire logeant le piston de commande (55).

15. Installation de freinage (1) selon la revendication 12, **caractérisée en ce que** le dispositif de soupape comporte une soupape à double blocage (52) dont les entrées (52-1) et (52-2) sont connectées entre la conduite de frein (34) et une sortie (16-21) de la soupape de frein (16) et dont la sortie (52-3) est reliée au raccordement de commande (16-4) de la soupape de frein (16), l'entrée (52-1, 52-2) chargée en pression plus réduite se connectant respectivement à la sortie (52-3).

16. Procédé pour faire fonctionner une installation de freinage (1) selon l'une quelconque des revendications 1 à 15, avec au moins les étapes suivantes :
envoi d'une pression de freinage d'essieu arrière sur une conduite de pression de freinage (27) d'un circuit de frein d'essieu arrière (20) en fonction d'un actionnement d'une soupape de frein (16) ;
envoi d'une pression de freinage d'essieu avant sur une conduite d'air comprimé d'un circuit de frein d'essieu avant (22) en fonction de l'actionnement de la soupape de frein (16) ;
mesure des vitesses de rotation de roue au niveau au moins des roues de l'essieu arrière ;
régulation par ABS au moins au niveau des roues de l'essieu arrière pour libérer une roue bloquée par freinage par réduction de la pression d'une conduite de frein (34, 35) conduisant à un cylindre de frein (4, 5) de la roue par excitation d'une électrovanne ABS (13, 14) ;
réalisation d'une limitation de force de freinage (EBL, EBD) électronique pour limiter la pression de freinage dans les conduites de frein (34, 35) entre les électrovannes ABS (13, 14) et les cylindres de frein (4, 5) des roues de l'essieu arrière en cas de détection d'une pression de freinage suffisamment élevée dans au moins une des conduites de frein (34, 35), une pression de freinage d'au moins une des conduites de frein (34, 35) étant ramenée au moins de temps en temps comme reflux de commande à une entrée de commande (16-4) de la soupape de frein (16) pour une régulation conjointe de la pression de freinage dans le circuit de frein d'essieu avant (22) ; et
en cas de régulation par ABS dans lequel la pression de freinage est réduite dans la conduite de frein (34, 35) en cas de détection d'un blocage d'une roue de l'essieu arrière, le reflux de commande de la pression de freinage est interrompu dans l'entrée de commande (16-4) de la soupape de frein (16) ; et
une purge de la pression de freinage apparaissant au niveau de l'entrée de commande (16-4) à l'aide de la deuxième soupape de retenue (39).

17. Procédé selon la revendication 16, **caractérisé en ce que** le reflux de commande de la pression de freinage est en outre interrompu en présence d'une intervention de régulation de patinage à l'entraînement dans lequel l'essieu arrière est actionné sans actionnement de la soupape de frein (16) lors de la détection d'un patinage à l'entraînement d'au moins une roue de l'essieu arrière des cylindres de frein (4, 5) de la roue, par exemple par actionnement d'une soupape d'amenée de pression de freinage (30) et de l'électrovanne ABS (13, 14) de la roue.

18. Procédé selon la revendication 16 ou 17, **caractérisé en ce qu'**une pression de freinage est mesurée dans au moins un des circuits de frein (20, 22) et que la limitation de force de freinage électronique est réalisée en fonction de la pression mesurée et que les vitesses de rotation de roue des roues de l'essieu arrière sont mesurées et que la régulation par ABS et/ou la régulation du patinage à l'entraînement est réalisée en utilisant les vitesses de rotation de roue déterminées.

19. Procédé selon l'une quelconque des revendications 16 à 18, **caractérisé en ce que** pour entraver un reflux de commande en cas de régulation par ABS, le guidage de la pression de freinage est bloqué depuis une conduite de commande de reflux (36) raccordée à l'entrée de commande (16-4) de la soupape de frein.

20. Procédé selon l'une quelconque des revendications 16 à 19, **caractérisé en ce qu'**un reflux de commande est entravé lors d'une intervention de régulation de patinage à l'entraînement lorsqu'au moins une conduite de pression de freinage (27, 58) d'un circuit de frein (20, 22) est sans pression du fait du non-actionnement de la soupape de frein (16) et en présence de l'actionnement d'au moins un cylindre de frein (4, 5) d'une roue de l'essieu arrière.
